Europäisches Patentamt

European Patent Office

Office européen des brevets

(19)

(11) Veröffentlichungsnummer: **0 310 985**
**B1**

(12) **EUROPÄISCHE PATENTSCHRIFT**

(45) Veröffentlichungstag der Patentschrift: 06.02.91

(21) Anmeldenummer: 88116303.4

(22) Anmeldetag: 01.10.88

(51) Int. Cl.⁵: **C 04 B 35/56,** C 04 B 41/91,
C 09 K 3/00

(54) Gleit- oder Dichtelementepaarung und Verfahren zu dessen Herstellung.

(30) Priorität: 06.10.87 DE 3733730

(43) Veröffentlichungstag der Anmeldung:
12.04.89 Patentblatt 89/15

(45) Bekanntmachung des Hinweises auf die
Patenterteilung:
06.02.91 Patentblatt 91/06

(84) Benannte Vertragsstaaten:
AT BE CH DE ES FR GB IT LI NL SE

(56) Entgegenhaltungen:
AT-B- 378 177
DE-A-2 854 612

(73) Patentinhaber: Feldmühle Aktiengesellschaft
Fritz-Vomfelde-Platz 4
D-4000 Düsseldorf 1 (DE)

(72) Erfinder: Friederich, Kilian, Dr. Dipl.-Ing.
Hohenstaufenstrasse 20
D-7310 Plochingen (DE)
Erfinder: Rogowski, Dirk, Dipl.-Ing. (FH)
Römerstrasse 13
D-7333 Bünzwangen (DE)

Courier Press, Leamington Spa, England.

## Beschreibung

Die vorliegende Erfindung betrifft ein Gleit- oder Dichtelementepaarung nach dem Oberbegriff des Anspruches 1.

Keramische Gleit- oder Dichtelemente sind bekannt. Derartige Bauteile haben je nach Einsatz ein umfangreiches Anforderungsspektrum zu erfüllen, wobei nur an die Korrosionsbeständigkeit gegen aggressive Medien, Thermoschockbeständigkeit bei Temperaturwechsel der Medien und Verschleißfestigkeit bei Medien mit abrasiven Bestandteilen erinnert sei. Die bis jetzt vorgeschlagenen Werkstoffe für Gleitelemente, wie Hartmetall, Aluminiumoxid, infiltriertes oder reaktionsgebundenes Siliciumcarbid und einphasiges Siliciumcarbid, konnten nur einen Teilaspekt des Anforderungskataloges erfüllen. So sind die Hartmetalle mit dem Nachteil der Korrosion und des Gewichtes behaftet. Aluminiumoxid ist gegenüber Thermoschock außerordentlich empfindlich. Mit Silicium infiltriertes Siliciumcarbid versagt beim. Einsatz in Laugen, die in der Chemieindustrie von Bedeutung sind.

Einphasiges Siliciumcarbid erschwert die Reproduzierbarkeit des Flächentraganteiles der Funktionsoberfläche.

Die italienische Patentanmeldung 67 746 A/82 beschreibt eine Dichtscheibe aus Siliciumcarbid, die mit einer weiteren Scheibe mit geringerer Härte kombiniert wird, um eine Reibungsverminderung zu erzielen.

Die DE-PS 35 09 572 beschreibt Gleitelemente, bei denen ein Substrat aus oxidischer oder nichtoxidischer Keramik an der Funktionsoberfläche mit Schichten aus Oxiden, Carbiden, Nitriden oder Boriden versehen ist und wobei diese Schichten mittels chemischer oder physikalischer Bedampfungsverfahren (CVD oder PVD) aufgebracht worden sind.

Auch diese Gleit- oder Dichtelementepaarungen haben jedoch in der Praxis keine Bedeutung erlangt, sei es, daß bei dem Vorschlag der italienischen Patentanmeldung durch Paarung unterschiedlicher Funktionsoberflächen eine unerwünschte Oberflächenveränderung der weniger harten Oberfläche eintritt, sei es, daß die nach dem Vorschlag der DE-PS 35 09 572 hergestellten Gleitelemente eine wirtschaftliche Massenherstellung wegen der aufwendigen CVD- oder PVD-Beschichtungsverfahren nicht zulassen.

Aufgabe der vorliegenden Erfindung ist eine Gleit-oder Dichtelementepaarung sowie ein Verfahren zu deren Herstellung zur Verfügung zu stellen, die außer sehr guter. Thermoschockbeständigkeit vorzügliche Haft- und Gleitreibungseigenschaften aufgrund einer verbesserten Einstellbarkeit des Flächentraganteils der Funktionsoberfläche aufweist, wobei darunter Folgendes verstanden wird:

Bei der Herstellung des erfindungsgemäßen Gegenstandes ist von ausschlaggebender Bedeutung, daß die Reibungskräfte einer Dicht- bzw. Gleitpaarung auf einem möglichst niederen Niveau gehalten werden, ohne daß die Dichtwirkung beeinträchtigt wird. Kleine Reibungskräfte werden dann erhalten, wenn mindestens eine Oberfläche der miteinander im Eingriff stehenden Elemente eine hohe Mikrowelligkeit aufweist. Die hohe Mikrowelligkeit deutet auf einen geringen Flächentraganteil hin, der durch das Verhältnis der tatsächlich tragenden Flächenteile zur Gesamtfläche beschrieben ist. Unter Mikrowelligkeit ist zum einen die Abrundung der einzelnen Körner an den Korngrenzen zu verstehen, zum anderen die Niveau-Unterschiede zwischen den unterschiedlichen harten Phasen, die beim Bearbeiten verschieden stark abgetragen werden.

Die Aufgabe wird durch den kennzeichnenden Teil des Anspruches 1 und die darauf zurückbezogenen Unteransprüche 2 bis 6 sowie durch den kennzeichnenden Teil des Anspruches 7 und die darauf zurückbezogenen Unteransprüche 8 bis 16 gelöst.

Die erfindungsgemäße Gleit- oder Dichtelementepaarung besteht aus mindestens einem drucklos gesinterten keramischen zweiphasigen Formkörper, der mittels seiner Funktionsoberfläche mit einem zweiten Element an sich bekannter Zusammensetzung in gleitendem oder dichtendem Eingriff steht. Das zweite Element kann aber auch dieselbe Zusammenzetzung wie der drucklos gesinterte keramische zweiphasige Formkörper aufweisen.

Der keramische Formkörper enthält:
44 bis 89,5 Gew.% α-Siliciumcarbid,
0,5 bis 6 Gew.% Borcarbid,
10 bis 50 Gew.% Metallboride,
wobei die Metallboride aus den Boriden der Metalle der Gruppe 4A, 5A oder 6A des Periodischen Systems (Ti, Zr, Hf, V, Nb, Ta, Cr, Mo, W) ausgewählt werden und gegebenenfalls einen geringen Anteil an freiem Kohlenstoff und ist frei von Aluminium oder Aluminiumverbindungen. Die Metallboride bilden in dem Formkörper eine diskrete zweite Phase und sind an den Funktionsoberflächen angereichert.

Bevorzugt enthält der keramische Formkörper
44 bis 86 Gew.% α-Siliciumcarbid,
4 bis 6 Gew.% Borcarbid,
10 bis 50 Gew.% Metallboride.
Der Metallboridgehalt des Formkörpers kann auf 10 bis 35 Gew.%, vorzugsweise auf 10 bis 20 Gew.% eingestellt werden. Dies hängt von der gewünschten Einstellbarkeit des Flächentraganteiles der Funktionsoberfläche ab.

Als Metallboride haben sich Zirkondiborid, Wolframborid $W_2B_5$, Niobdiborid und/oder Molybdänborid sowie Abmischungen aus zwei oder mehreren dieser Metallboride bewährt. Die Auswahl wird vorzugsweise nach der Verfügbarkeit und Preiswürdigkeit der einzelnen Verbindungen getroffen. Bevorzugt wird jedoch Zirkondiborid.

Der gegebenenfalls noch vorhandene freie Kohlenstoffanteil, der durch das weiter unter beschriebene Verfahren bedingt sein kann, wird vorzugsweise nicht über 2 Gew.% gewählt, da höhere Anteile die Festigkeitseigenschaften des keramischen zweiphasigen Formkörpers negativ beeinflussen. Daher werden Kohlenstoffanteil kleiner als 0,5 Gew.% ganz besonders bevorzugt.

Bei einem erfindungsgemäßen Verfahren zur Herstellung des keramischen zweiphasigen Formkörpers für eine Gleit- mder Dichtelementepaarung wird zunächst eine Ausgangspulvermischung aus 44 bis 89,5 Gewichtsteilen α-Siliciumcarbidpulver, 10 bis 50 Gewichtsteilen Metallboridpulver der Metalle der Gruppe 4A, 5A und 6A des Periodischen Systems, eine weitere Borquelle entsprechend 0,39 bis 4,68 Gewichtsteilen metallischem Bor und eine elementaren Kohlenstoff liefernde Verbindung entsprechend 0,5 bis 5 Gewichtsteilen Kohlenstoff oder elementarer Kohlenstoff miteinander intensiv vermischt. Die Korngröße des α-Siliciumcarbidpulvers wird dabei entsprechend einer spezifischen Oberfläche von 9 bis 25 m²/g, vorzugsweise 9 bis 16 m²/g gewählt. Die Korngröße des Metallboridpulvers kann zwischen 0,5 bis 15 m²/g, vorzugsweise 0,5 bis 2 m²/g gewählt werden.

Bevorzugt wird eine Ausgangspulvermischung aus 44 bis 86 Gewichtsteilen α-Siliciumcarbidpulver, 10 bis 50 Gewichtsteilen Metallboridpulver der Metalle der Gruppe 4A, 5A und 6A des Periodischen Systems, eine weitere Borquelle entsprechend 3,12 bis 4,68 Gewichtsteilen metallischem Bor und eine elementaren Kohlenstoff liefernde Verbindung entsprechend 0,5 bis 5 Gewichtsteilen Kohlenstoff oder elementarer Kohlenstoff miteinander intensiv vermischt.

Als Borquelle hat sich metallisches Bor mit einer Korngröße entsprechend einer spezifischen Oberfläche von 5 bis 15 m²/g oder Borcarbidpulver mit einer Korngröße entsprechend einer spezifischen Oberfläche von 3 bis 15 m²/g bewährt. Als Kohlenstoffquelle können die üblichen aus der Siliciumcarbid-Sintertechnik bekannten Verbindungen, wie sie zum Beispiel in der DE-OS 24 49 662 beschrieben worden sind, herangezogen werden. Als Beispiele werden hier genannt: Phenolharze der unterschiedlichen Typen, Polyvinylalkohole, Polyäthylenglykole, elementarer Ruß. Bevorzugt werden Phenolharze gewählt, ganz besonders bewährt hat sich jedoch elementarer Kohlenstoff in Form von Ruß mit einer spezifischen Oberfläche von ca. 200 m²/g. Ein derartiger Ruß ist zum Beispiel als Schwarzpigment für die Druckfarbenindustrie erhältlich. Es ist aber auch möglich, Abmischungen aus pyrolysierbaren Kohlenstoffquellen und Ruß als Kohlenstofflieferant zu wählen.

Die so ausgewählten Pulverkomponenten werden einer intensiven Mischung unterzogen. Diese kann zum Beispiel in einer bekannten Schwingmühle erfolgen, wobei gegebenenfalls noch eine Mahlung der einzelnen Pulverbestandteile in inerten Flüssigkeiten durchgeführt werden kann. Nach der Mischung bzw. Mahlung kann es für bestimmte Erfordernisse der Herstellung der grünen Formkörper vorteilhaft sein, die Pulvermischung in einem Sprühtrocknungsverfahren zu granulieren. Man erhält damit rieselfähige Pulver einheitlicher Zusammensetzung, die auf Automatenpressen leicht zu grünen Formkörpern weiterverarbeitet werden.

Die Pulvermischung kann aber auch nach anderen in der Keramikindustrie bekannten Verfahren zu grünen Forkörpern weiterverarbeitet werden, wie zum Beispiel Spritzgießen, Spritzpressen oder Schlickergießverfahren.

Soweit die grünen Formkörper ein temporäres Bindemittel benötigen, z.B. wegen ihrer komplizierten Gestalt oder wegen einer meschanischen Bearbeitung, können die aus der DE-OS 24 49 662 bekannten Bindemittel herangezogen werden, die dann natürlich vor dem eigentlichen Sinterverfahren zunächst ausgetrieben oder ausgeheizt werden müssen.

Die drucklose Sinterung der grünen Formkörper erfolgt bei einer Temperatur von 2000 bis 2250°C im Vakuum oder in einer Schutzgasatmosphäre während einer Haltezeit von 0,5 bis 3 h. Wird unter Vakuum gesintert, so wird eine Temperatur von 2200°C während einer Haltezeit von 1h gewählt. Die Aufheizgeschwindigkeit auf Sintertemperatur wird dabei auf 5 bis 20°C/min eingestellt.

Für das Sintern in einer Schutzgasatmosphäre wird vorteilhafterweise eine Argonatmosphäre mit einem Druck von 0,1 bis 1,0 bar gewählt. Die Sintertemperatur beträgt dabei 2000 bis 2250°C während einer Haltezeit von 0,5 bis 3 h. Die Aufheizgeschwindigkeit auf die Sintertemperatur beträgt 5 bis 20°C/min.

Nach dem Sintervorgang und Abkühlen des keramischen zweiphasigen Formkörpers wird der Metallboridgehalt an der vorgesehenen Funktionsoberfläche dadurch erhöht, daß der Siliciumcarbidgehalt mittels an sich bekannter Oberflächenbearbeitung bis zu einer Tiefe von 0,05 bis 0,6 μm reduziert wird. Mittels dieser Behandlung ist eine gezielte und auf den jeweiligen Einsatzzweck abgestimmte Einstellung des Flächentraganteiles der Funktionsoberfläche durchführbar.

Zur Reduzierung des Siliciumcarbidgehaltes an der Funktionsoberfläche kann eine gezielt abtragende Bearbeitung der einzelnen Siliciumcarbidkörner erfolgen. Dies ist mittels mechanischer Bearbeitung, wie Schleifen, Läppen oder Polieren oder einer Kombination dieser Maßnahmen möglich.

Da der keramische zweiphasige Formkörper eine elektrische Leitfähigkeit besitzt, ist die Oberflächenbearbeitung auch mittels der an sich bekannten Funkenerosion durchführbar.

Ein weiteres bevorzugtes Mittel zur Oberflächenbearbeitung ist das chemische Ätzen. Dazu wird ein an der Funktionsoberfläche mittels Schleifen und Läppen vorbereiteter Formkörper in einer Plasmakammer einer Atmosphäre von Sauerstoff und Tetrafluorkohlenstoff ($CF_4$) ausgesetzt. Der Gesamtdruck in der Plasmakammer wird auf $10^{-2}$ bis $10^{-1}$ mbar eingestellt, wobei der Partialdruck von Sauerstoff $5 \times 10^{-4}$ bis $9 \times 10^{-2}$ mbar beträgt. Im Plasmazustand bilden sich in dieser Atmosphäre Sauerstoff-, Trifluorkohlenstoff- und Fluorradikale. Diese Radikale reagieren mit Silicium zu Siliciumtetrafluorid bzw. mit Kohlenstoff zu Kohlendioxid. Diese gasförmigen Verbindungen werden über das Vakuumsystem abgesaugt. Damit wird Siliciumcarbid selektiv an der ursprünglich ebenen Oberfläche abgetragen und die dispergierten die zweite Phase bildenden Metallboridteilchen bleiben als erhabene Bestandteile erhalten. Der Abtrag von Siliciumcarbid kann über die Einwirkungszeit der chemischen Ätzung in der Plasmakammer zwischen 0,05 und 0,5 µm ebenfalls variiert werden.

Ein nach dem obigen Verfahren hergestellter keramischer zweiphasiger Formkörper für Gleit- oder Dichtelementepaarung, dessen Ausgangspulvermischung aus 81,4 Gew.% α-Siliciumcarbid, 4,0 Gew.% metallischem Bor, 4,6 Gew.% Ruß und 10,0 Gew.% Zirkondiborid bestand und der im Vakuum bei 2190°C während einer Stunde gesintert wurde, weist folgende Materialeigenschaften auf:

Dichte ρ 3,23 g/cm$^3$ entsprechend 97% der theoretischen Dichte

Bruchfestigkeit $\sigma_B$ 270 bis 350 MPa

Weibull-Modul m 10,6

E-Modul 410 GPa

Bruchzähigkeit 4 MPa m$^{1/2}$

Die thermischen Eigenschaften wurden mit

Ausdehnungskoeffizient $\alpha = 3{,}5 \times 10^{-6}$ K$^{-1}$

Wärmeleitfähigkeit = 100 W/mK

bestimmt.

Die Temperaturschockfestigkeit betrug $\Delta T 200$°C beim Abschrecken in Wasser. Die Probe bleibt rißfrei.

Die beschriebenen keramischen zweiphasigen Formkörper können z.B. als Gleitringe im Pumpenbau, als Dichtscheiben in Sanitärarmaturen, Foil-, Saugkastenbeläge oder Rohrsauger in Maschinen der Papierindustrie, aber auch als derartige Maschinenelemente im allgemeinen Maschinenbau eingesetzt werden, wo hochverschleißfeste Teile im gleitreibenden Einsatz evtl. unter Einfluß von korrosiven oder abrasiven Medien benötigt werden.

## Patentansprüche

1. Gleit- oder Dichtelementepaarung mit verbesserter Einstellbarkeit des Flächentraganteils mit mindestens einem in gleitendem oder dichtendem Kontakt mit einer Gegenfläche stehenden drucklos gesinterten keramischen zweiphasigen Formkörper, enthaltend Siliciumcarbid, Borcarbid, Metallboride und gegebenenfalls freien Kohlenstoff, dadurch gekennzeichnet, daß der Sinterformkörper

44 bis 89,5 Gew.% α-Siliciumcarbid

0,5 bis 6 Gew.% Borcarbid

10 bis 50 Gew.% Metallboride

enthält, wobei die Metallboride aus den Boriden der Metalle der Gruppe 4A, 5A oder 6A des Periodischen Systems (Ti, Zr, Hf, V, Nb, Ta, Cr, Mo, W) ausgewählt sind, und eine zweite disperse Phase in dem Sinterformkörper bilden, und die im gleitenden oder dichtenden Eingriff stehende Funktionsoberfläche des Formkörpers einen erhöhten Metallboridgehalt aufweist.

2. Gleit- oder Dichtelementepaarung nach Anspruch 1, dadurch gekennzeichnet, daß der Sinterformkörper

44 bis 86 Gew.% α-Siliciumcarbid

4 bis 6 Gew.% Borcarbid

10 bis 50 Gew.% Metallborid

enthält.

3. Gleit- oder Dichtelementepaarung nach Anspruch 1, dadurch gekennzeichnet, daß der Sinterformkörper 10 bis 35 Gew.% Metallboride enthält.

4. Gleit- oder Dichtelementepaarung nach Anspruch 1, dadurch gekennzeichnet, daß der Sinterformkörper 10 bis 20 Gew.% Metallboride der Metalle Zirkon, Wolfram, Niob, Molybdän enthält.

5. Gleit- oder Dichtelementepaarung nach Anspruch 1 bis 4, dadurch gekennzeichnet, daß der Sinterformkörper als Metallborid eine Abmischung aus zwei oder mehreren der Boride Zirkondiborid, Wolframborid W$_2$B$_5$, Niobdiborid und/oder Molybdänborid enthält.

6. Gleit- oder Dichtelementepaarung nach Anspruch 1 bis 5, dadurch gekennzeichnet, daß der Sinterformkörper bis zu 2 Gew.% freien Kohlenstoff enthält.

7. Verfahren zur Herstellung einer Gleit- oder Dichtelementepaarung, dadurch gekennzeichnet, daß eine Ausgangsmischung aus

a) 44 bis 89,5 Gewichtsteile α-SiC-Pulver mit einer spezifischen Oberfläche von 9 bis 25 m$^2$/g

b) 10 bis 50 Gewichtsteile Metallboride der Metalle der Gruppe 4A, 5A und 6A mit einer spezifischen Oberfläche von 0,5 bis 15 m$^2$/g

c) eine weitere Borquelle entsprechend 0,39 bis 4,68 Gewichtsteile metallischem Bor

d) eine Kohlenstoffquelle entsprechend 0,5 bis 5 Gewichtsteile elementaren Kohlenstoffs in an sich bekannter Weise einer intensiven Mischung unterzogen wird, aus der Mischung gegebenenfalls unter Verwendung eines temporären Bindemittels grüne Formkörper hergestellt werden und diese bei einer Temperatur von 2.000 bis 2.250°C im Vakuum oder in einer Schutzgasatmosphäre während einer Haltezeit von 0,5 bis 3 h gesintert werden, anschließend der Siliciumcarbidgehalt der zum gleitenden oder dichtenden Einsatz mit dem Gegenelement vorgesehenen Funktionsoberfläche des Sinterkörpers mittels an sich bekannter Oberflächenbearbeitung bis zu einer Tiefe von 0,05 bis 0,6 µm reduziert wird.

8. Verfahren nach Anspruch 7, dadurch gekennzeichnet, daß eine Ausgangsmischung aus

a) 44 bis 86 Gewichtsteile α-SiC-Pulver mit einer spezifischen Oberfläche von 9 bis 25 m$^2$/g

b) 10 bis 50 Gewichtsteile Metallboride der Metalle der Gruppe 4A, 5A und 6A mit einer spezifischen Oberfläche von 0,5 bis 15 m$^2$/g

c) eine weitere Borquelle entsprechend 3,12 bis 4,68 Gewichtsteile metallischem Bor

d) eine Kohlenstoffquelle entsprechend 0,5 bis 5 Gewichtsteile elementaren Kohlenstoffs in an sich bekannter Weise einer intensiven Mischung unterzogen wird.

9. Verfahren nach Anspruch 7, dadurch gekennzeichnet, daß für die Ausgangsmischung α-Siliciumcarbidpulver mit einer spezifischen Oberfläche von 9 bis 16 m²/g ausgewählt wird.

10. Verfahren nach Anspruch 7, dadurch gekennzeichnet, daß für die Ausgangsmischung ein Metallboridpulver aus Zirkondiborid, Wolframborid $W_2B_5$, Niobdiborid, Molybdänborid oder aus Mischungen dieser Boride mit einer spezifischen Oberfläche von 0,5 bis 2 m²/g ausgewählt wird.

11. Verfahren nach Anspruch 7, dadurch gekennzeichnet, daß als weitere Borquelle metallisches Bor mit einer Korngröße entsprechend einer spezifischen Oberfläche von 5 bis 15 m²/g gewählt wird.

12. Verfahren nach Anspruch 7, dadurch gekennzeichnet, daß als Kohlenstoffquelle Phenolharz, Polyvinylalkohol, Polyäthylenglykol, elementarer Kohlenstoff in Form von Ruß mit spezifischer Oberfläche von 200 m²/g einzeln oder in Mischungen davon gewählt wird.

13. Verfahren nach Anspruch 7, dadurch gekennzeichnet, daß die Sinterung des grünen Formkörpers

a) im Vakuum bei 2.200°C während einer Haltezeit von 1 h durchgeführt wird und wobei die Aufheizgeschwindigkeit 5 bis 20°C/min beträgt, oder

b) in einer Argonatmosphäre bei einem Druck von 0,1 bis 1 bar bei 2.000°C bis 2.250°C während einer Haltezeit von 0,5 bis 3 h durchgeführt wird, wobei die Aufheizgeschwindigkeit 5 bis 20°C/min beträgt,

und daran anschließend der Siliciumcarbidgehalt an der Funktionsoberfläche des Sinterformkörpers mittels abtragender Oberflächenbearbeitung reduziert wird.

14. Verfahren nach Anspruch 13, dadurch gekennzeichnet, daß der Siliciumcarbidgehalt an der Funktionsoberfläche mittels mechanischer Oberflächenbearbeitung, wie Schleifen, Läppen, Polieren, einzeln oder in Kombination, reduziert wird.

15. Verfahren nach Anspruch 13, dadurch gekennzeichnet, daß die Oberflächenbehandlung mittels Funkenerosion erfolgt.

16. Verfahren nach Anspruch 13, dadurch gekennzeichnet, daß die Oberflächenbehandlung durch chemischen Ätzen erfolgt, wobei eine selektive Ätzung von SiC plasmaunterstützt durch eine Gasphase erfolgt.

## Revendications

1. Accouplement d'éléments de glissement ou d'étanchéité offrant des possibilités améliorées de réglage de la partie porteuse de la surface, comprenant au moins une pièce formée à deux phases, en matière céramique frittée sans compression, en contact glissant ou étanche avec une contre-surface, cette pièce formée contenant du carbure de silicium, du carbure de bore, des borures métalliques et les cas échéant du carbone libre, caractérisé en ce que la pièce formée frittée contient

44 à 89,5% en poids de carbure de silicium alpha,

0,5 à 6% en poids de carbure de bore,

10 à 50% en poids de borures métalliques, les borures métalliques étant choisis parmi les borures des métaux du groupe 4A, 5A ou 6A de la Classification Périodique (Ti, Zr, Hf, V, Nb, Ta, Cr, Mo, W) et formant une deuxième phase dispersée dans la pièce formée fritté, et la surface fonctionnelle de la pièce formée, en contact glissant ou étanche, présente une teneur accrue en borures métalliques.

2. Accouplement d'éléments de glissement ou d'étanchéité selon la revendication 1, caractérisé en ce que la pièce formée frittée contient

44 à 86% en poids de carbure de silicium alpha,

4 à 6% en poids de carbure de bore,

10 à 50% en poids de borures métalliques.

3. Accouplement d'éléments de glissement ou d'étanchéité selon la revendication 1, caractérisé en ce que la pièce formée frittée contient 10 à 35% en poids de borures métalliques.

4. Accouplement d'éléments de glissement ou d'étanchéité selon la revendication 1, caractérisé en ce que la pièce formée frittée contient 10 à 20% en poids de borures métalliques des métaux zirconium, tungstène, niobium, molybdène.

5. Accouplement d'éléments de glissement ou d'étanchéité selon les revendications 1 à 4, caractérisé en ce que la pièce formée frittée contient, en tant que borure métallique, un mélange de deux ou plusieurs des borures: diborure de zirconium, borure de tungstène $W_2B_5$, diborure de niobium et/ou borure de molybdène.

6. Accouplement d'éléments de glissement ou d'étanchéité selon les revendications 1 à 5, caractérisé en ce que la pièce formée frittée contient jusqu'à 2% en poids de carbone libre.

7. Procédé pour la fabrication d'un accouplement d'éléments de glissement ou d'étanchéité, caractérisé en ce que l'on soumet à un mélange poussé, de manière connue en soi, un mélange initial consistant en:

a) 44 à 89,5 parties en poids de poudre de SiC alpha, ayant une surface spécifique de 9 à 25 m²/g,

b) 10 à 50 parties en poids de borures métalliques de métaux des groupes 4A, 5A et 6A, ayant une surface spécifique de 0,5 à 15 m²/g,

c) une autre source de bore en quantité correspondant à 0,39 à 4,68 parties en poids de bore métallique,

d) une source de carbone en quantité correspondant à 0,5 à 5 parties en poids de carbone élémentaire, on prépare à partir de ce mélange, éventuellement en utilisant un liant temporaire, des pièces formées crues qu'on fritte à une température de 2000 à 2250°C sous vide ou en atmosphère de gaz protecteur, pendant une durée de 0,5 à 3 h, puis par un traitement de surface connu en soi, on diminue la teneur en carbure de silicium de la surface fonctionnelle de la pièce frittée, prévue pour le contact glissant ou étanche avec le contre-élément, jusqu'à une profondeur de 0,05 à 0,6 µm.

8. Procédé selon la revendication 7, caractérisé en ce que l'on soumet à un mélange poussé, de manière connue en soi, un mélange de départ consistant en:

a) 44 à 86 parties en poids de poudre de SiC alpha ayant une surface spécifique de 9 à 25 m²/g,

b) 10 à 50 parties en poids de borures métalliques des métaux des groupes 4A, 5A et 6A, ayant une surface spécifique de 0,5 à 15 m²/g,

c) une autre source de bore sn quantité correspondant à 3,12 à 4,68 parties en poids de bore métallique,

d) une source de carbone en quantité correspondant à 0,5 à 5 parties en poids de carbone élémentaire.

9. Procédé selon la revendication 7, caractérisé en ce que, pour le mélange de départ, on utilise une poudre de carbure de silicium alpha ayant une surface spécifique de 9 à 16 m²/g.

10. Procédé selon la revendication 7, caractérisé en ce que l'on utilise pour le mélange de départ une poudre de borures métalliques consistant en diborure de zirconium, borure de tungstène W₂B₅, diborure de niobium, borure de molybdène ou en un mélange de ces borures, avec une surface spécifique de 0,5 à 2 m²/g.

11. Procédé selon la revendication 7, caractérisé en ce que l'on utilise, en tant qu'autre source de bore, du bore métallique ayant une taille de grain correspondant à une surface spécifique de 5 à 15 m²/g.

12. Procédé selon la revendication 7, caractérisé en ce que l'on utilise, en tant que source de carbone, une résine phénolique, du poly(alcool vinylique), du polyéthylèneglycol, du carbone élémentaire à l'état de noir de fumée ayant une surface spécifique de 200 m²/g, isolément ou en mélange entre eux.

13. Procédé selon la revendication 7, caractérisé en ce que le frittage de la pièce formée crue est réalise:

a) sous vide à 2200°C, avuc une durée de maintien en température d'1 h, la vitesse d'échauffement étant de 5 à 20°C/min, ou bien

b) en atmosphère d'argon, sous une pression de 0,1 à 1 bar, à une température de 2000 à 2250°C, avec une durée de maintien en température de 0,5 à 3 h, la vitesse d'échauffement étant de 5 à 20°C/min, après quoi on diminue, par un traitement de surface avec enlèvement, la teneur en carbure de silicium à la surface fonctionnelle de la pièce formée frittée.

14. Procédé selon la revendication 13, caractérisé en ce que l'on diminue la teneur en carbure de silicium à la surface fonctionnelle par un traitement mécanique de surface, tel que meulage, ponçage, polissage, puis isolément ou en combinaison entre eux.

15. Procédé selon la revendication 13, caractérisé en ce que le traitement de surface est réalisé par étincelage.

16. Procédé selon la revendication 13, caractérisé en ce que le traitement de surface est réalisé par attaque chimique, une attaque sélective du SiC, aidée par un plasma, étant réalisée par une phase gazeuse.

**Claims**

1. Sliding or sealing element pairing with improved adjustability of the bearing percentage having, in sliding or sealing contact with a complementary surface, at least one ceramic two-phase moulded body, sintered without pressure, containing silicon carbide, boron carbide, metal borides and, optionally, free carbon, characterised in that the sintered moulded body contains

44 to 89.5% by weight of α-silicon carbide

0.5 to 6% by weight of boron carbide

10 to 50% by weight of metal borides,

the metal borides being selected from the borides of metals of the group 4A, 5A or 6A of the Periodic Table (Ti, Zr, Hf, V, Nb, Ta, Cr, Mo, W), and forming a second dispersed phase in the sintered moulded body, and the functional surface, which is in sliding or sealing engagement, of the moulded body having an increased metal boride content.

2. Sliding or sealing element pairing according to Claim 1, characterised in that the sintered moulded body contains

44 to 86% by weight of α-silicon carbide

4 to 6% by weight of boron carbide

10 to 50% by weight of metal borides.

3. Sliding or sealing element pairing according to Claim 1, characterised in that the sintered moulded body contains 10 to 35% by weight of metal borides.

4. Sliding or sealing element pairing according to Claim 1, characterised in that the sintered moulded body contains 10 to 20% by weight of metal borides of the metals zircon, tungsten, niobium, molybdenum.

5. Sliding or sealing element pairing according to Claim 1 to 4, characterised in that the sintered moulded body contains as metal boride, a mixture of two or more of the borides zircon diboride, tungsten boride W₂B₅, niobium diboride and/or molybdenum boride.

6. Sliding or sealing element pairing according to Claim 1 to 5, characterised in that the sintered moulded body contains up to 2% by weight of free carbon.

7. Process for the production of a sliding or sealing element pairing, characterised in that an initial mixture of

a) 44 to 89.5 parts by weight of α-SiC powder having a specific surface area of from 9 to 25 m²/g

b) 10 to 50 parts by weight of metal borides of the metals of group 4A, 5A and 6A, having a specific surface area of from 0.5 to 15 m²/g

c) a further boron source corresponding to 0.39 to 4.68 parts by weight of metallic boron

d) a carbon source corresponding to 0.5 to 5 parts by weight of elementary carbon

is subjected in a manner which is known *per se* to intensive mixing, and from the mixture, using a temporary binding agent if appropriate, "green" moulded bodies are produced and these are sintered at a temperature of 2,000 to 2,250°C under vacuum or in a protective gas atmosphere for a dwell of from 0.5 to 3 hours, then the silicon carbide content of the functional surface, provided for sliding or sealing use with the complementary element, of the sintered body is reduced by means of a surface treatment, which is known *per se* to a depth of 0.05 to 0.6 μm.

8. Process according to Claim 7, characterised in that an initial mixture of

a) 44 to 86 parts by weight of α-SiC powder having a specific surface area of from 9 to 25 m²/g

b) 10 to 50 parts by weight of metal borides of the metals of group 4A, 5A and 6A, having a specific surface area of from 0.5 to 15 m²/g

c) a further boron source corresponding to 3.12 to 4.68 parts by weight of metallic boron

d) a carbon source corresponding to 0.5 to 5 parts by weight of elementary carbon is subjected in a manner which is known *per se* to intensive mixing.

9. Process according to Claim 7, characterised in that for the initial mixture α-silicon carbide powder having a specific surface area of from 9 to 16 m²/g is selected.

10. Process according to Claim 7, characterised in that for the initial mixture, a metal boride powder consisting of zircon diboride, tungsten boride $W_2B_5$, niobium diboride, molybdenum boride or of mixtures of these borides having a specific surface area of 0.5 to 2 m²/g is selected.

11. Process according to Claim 7, characterised in that as a further boron source metallic boron having a grain size corresponding to a specific surface area of from 5 to 15 m²/g is selected.

12. Process according to Claim 7, characterised in that as the carbon source phenolic resin, polyvinyl alcohol, polyethylene glycol, elementary carbon in the form of carbon black, having a specific surface aera of 200 m²/g is selected, singly or in mixtures thereof.

13. Process according to Claim 7, characterised in that the sintering of the "green" moulded body is carried out

a) under vacuum at 2,200°C for a dwell time of 1 hour, the rate of heating-up being from 4 to 20°C/min, or

b) in an argon atmosphere at a pressure of from 0.1 to 1 bar at 2,000°C to 2,250°C for a dwell time of from 0.5 to 3 hours, the rate of heating-up being from 5 to 20°C/min, and then the silicon carbide content on the functional surface of the sintered moulded body is reduced by means of abrasive surface treatment.

14. Process according to Claim 13, characterised in that the silicon carbide content on the functional surface is reduced by means of mechanical surface treatment, such as grinding, lapping, polishing, singly or in combination.

15. Process according to Claim 13, characterised in that the surface treatment is carried out by means of electrical discharge machining.

16. Process according to Claim 13, characterised in that the surface treatment is carried out by means of chemical etching, selective etching of SiC being carried out, assisted by plasma, by means of a gas phase.